# EUROPEAN PATENT APPLICATION

(11) **EP 4 542 176 A1**
(43) Date of publication of application: **23.04.2025**
(21) Application number: 23306803.0
(22) Date of filing: 16.10.2023
(51) Int. Cl.: G01D 5/20, G01K 1/00, G01L 1/00

(54) **ELECTROMECHANICAL ACTUATOR WITH OPERATIONAL SENSORS**

(71) Applicant: Goodrich Actuation Systems SAS, 27950 Saint-Marcel (FR)
(72) Inventor: SERRAND, Maxime, 95056 Saint Ouen L Aumone (FR); MEDINA, Raphael, 95056 Saint Ouen L Aumone (FR); MENANTEAU, Patrice, 95056 Saint Ouen L Aumone (FR)
(74) Representative: Dehns

(57) **Abstract**

An electromechanical actuator, EMA, (1) is provided comprising: a stationary body portion (11); a movable body portion (13) configured to move relative to the stationary body portion (11); an actuation element (19) connecting the stationary body portion (11) and the movable body portion (13) and configured to actuate the movable body portion (13) relative to the stationary body portion (11); a surface acoustic wave, SAW, sensor (4) disposed on the actuation element (19); a first interface component (2) disposed on the stationary body portion (11) at an interface (17) between the stationary body portion (11) and the movable body portion (13); and a second interface component (3) disposed on the movable body portion (13) at the interface (17) between the stationary body portion (11) and the movable body portion (13); wherein the second interface component (3) is configured to transmit signals between the SAW sensor (4) and the first interface component (2); and wherein the first interface component (2) and the second interface component (3) define an inductive position sensor (6), such that the first interface component (2) produces a signal suitable for determination of the position of the second interface component (3).

## Description

### FIELD

The present disclosure relates to an electromechanical actuator, and in particular to an electromechanical actuator with operational sensors.

### BACKGROUND

Electromechanical actuators, EMAs, are used for actuation of various movable components. For example, on aircraft such as airplanes, EMAs may be used for actuation of flight control surfaces. One example of a flight control surface is a spoiler of an aircraft wing.

There is a need to monitor the performance and operation of EMAs in use, especially in safety critical applications. The position of rotary EMAs can be monitored by using an output position sensor. Output position sensors, as described in EP4209415, are attached to EMA inside a gearbox, which increases the overall size of the EMAs and thus increases the weight of the EMAs.

### SUMMARY

According to a first aspect of the invention an electromechanical actuator, EMA, is provided. The EMA comprises: a stationary body portion; a movable body portion configured to move relative to the stationary body portion; an actuation element connecting the stationary body portion and the movable body portion and configured to actuate the movable body portion relative to the stationary body portion; a surface acoustic wave, SAW, sensor disposed on the actuation element; a first interface component disposed on the stationary body portion at an interface between the stationary body portion and the movable body portion; and a second interface component disposed on the movable body portion at the interface between the stationary body portion and the movable body portion; wherein the second interface component is configured to transmit signals between the SAW sensor and the first interface component; and wherein the first interface component and the second interface component define an inductive position sensor, such that the first interface component produces a signal suitable for determination of the position of the second interface component.

The first interface component may comprise a stationary body portion SAW antenna and the second interface component comprises a movable body portion SAW antenna configured to transmit signals between the stationary body portion SAW antenna and the SAW sensor.

The first interface component may comprise a position detection antenna and the second interface component may comprise a position target configured to interact with the position detection antenna to produce a signal indicative of the position of the position target.

The position target may be a passive position target device.

The first interface component may comprise a planar array of conductors configured to transmit and receive signals to and from the position target.

The position detection antenna may comprise the planar array of conductors configured to transmit and receive signals to and from the position target.

The actuation element may comprise a motor and a gearbox, and wherein the SAW sensor may be disposed on a rotating shaft of the motor or on a component of the gearbox.

The SAW sensor may be configured to measure a property of the actuation element, wherein the property may comprise at least one of: a torque, a temperature, a rotation speed and a strain.

The stationary body portion SAW antenna and the position detection antenna may be disposed adjacent each other.

The stationary body portion SAW antenna may be radially inwards of the position detection antenna.

The EMA may further comprise: an interrogation unit configured to send an interrogation signal to the first interface component, wherein the interrogation signal comprises a first signal component at a first frequency and a second signal component at a second, different frequency.

The first interface component may be configured to transmit the first signal component to the second interface component.

The interrogation unit may comprise a SAW interrogation unit and/or a position interrogation unit

The first frequency may be in a first frequency range of between 100-200MHz and the second frequency may be in a second frequency range of between 1-50MHz.

The EMA may be a rotary actuator configured to provide rotary actuation of the movable body portion relative to the stationary body portion.

According to another aspect of the invention, a method of using an electromechanical actuator, EMA, is provided. The EMA comprises a stationary body portion, a movable body portion, an actuation element, a surface acoustic wave, SAW, sensor disposed on the actuation element, a first interface component and a second interface component, both the first and second interface component being disposed at an interface between the stationary body portion and the movable body portion. The method comprising the steps of: sending a first signal component at a first frequency to the first interface component; transmitting the first signal component from the first interface component to the SAW sensor through a second interface component, so as to cause the SAW sensor to produce surface acoustic waves and return a signal indicative of a property of the actuation element to the first interface component; sending a second signal component at a second frequency to the first interface component, so as to determine the position of the second interface component relative to the first interface component based on the inductive interaction between the first interface component and the second interface component.

Transmitting the first signal component may comprise transmitting the first signal component from a stationary body portion SAW antenna of the first interface component to a movable body portion SAW antenna of the second interface component.

Sending the second signal component may comprise sending the second signal component to a position detection antenna of the first interface component.

An interrogation unit may send the first signal component and the second signal component to the first interface component.

According to another aspect of the invention, an aerial vehicle comprising a flight control surface and an EMA configured to actuate the flight control surface is provided, wherein the EMA is according to the first aspect of the invention.

The features described in respect of the first aspect may be used in conjunction with the method of the second aspect, optionally, with any of the optional features thereof. Conversely, the features of the method aspect may be used in conjunction with the first aspect, optionally, with any of the optional features thereof. Likewise, the optional features of the first and/or second aspect may be applied to the third aspect.

### BRIEF DESCRIPTION OF THE DRAWINGS

Certain embodiments of the invention will now be described, by way of example only, and with reference to the accompanying drawings in which:
Figure 1 shows an electromechanical actuator, EMA, with operational sensors;
Figure 2 shows a schematic diagram of a surface acoustic wave, SAW, sensor assembly;
Figure 3 shows a schematic diagram of the EMA of Figure 1 showing a SAW sensor and a position sensor;
Figure 4 shows a schematic of another EMA with operational sensors; and
Figure 5 shows a schematic diagram of the EMA of Figure 4 showing a SAW sensor and a position sensor.

### DETAILED DESCRIPTION

There is a continuous pressure on the aerospace industry to reduce emissions of aircraft. One option for reducing emissions is to reduce the overall weight of the aircraft resulting in a lower fuel consumption. This involves reducing the weight of constituent parts of the aircraft, e.g. Electromechanical Actuators (EMAs). However, as some aircraft parts are safety critical, it is not always feasible to replace a component for a lower-weight alternative, or to change from one material to another (e.g. change from steel to aluminium). That is because these components need to meet stringent safety and reliability requirements. The system described herein aims to in part to provide an improved EMA, and in part provide an EMA with a lower weight and/or volume for a comparable performance.

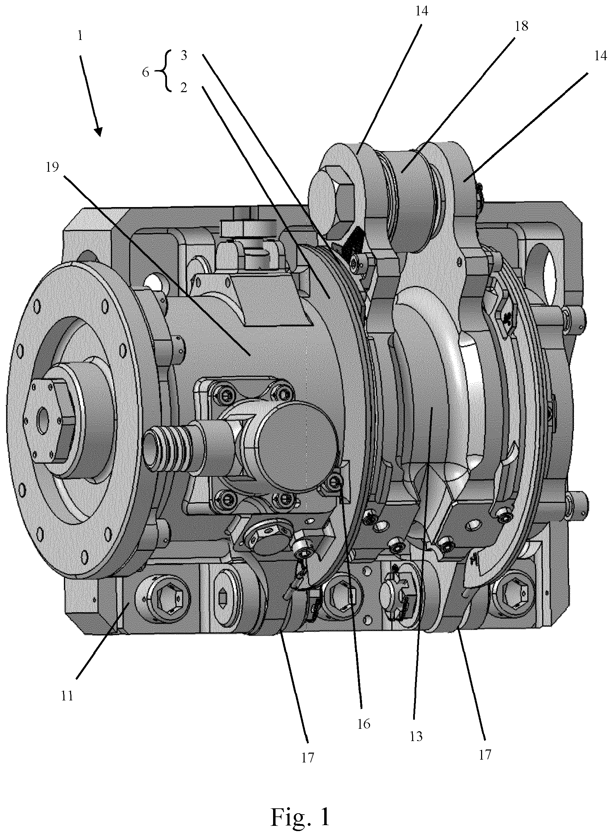

Figure 1 shows a first embodiment of an electromechanical actuator, EMA, 1 with operational sensors. The EMA 1 of Figure 1 is a rotary EMA 1, but the teachings herein are applicable to other types of EMAs, such as a linear EMA as described further below.

The EMA 1 of Figure 1 comprises a stationary body portion 11 and a movable body portion 13. In use, the EMA 1, actuates the movable body portion 13 such that it is displaced relative to the stationary body portion 11, i.e. by rotation, around an axis, relative to the stationary body portion 11.

The movable body portion 13 may be provided with one or more attachment components 14, such as the two attachment components 14 shown in Figure 1. The one or more attachment components 14 may be configured to attach to another object or structure, such that actuation of the movable body portion 13 causes a corresponding actuation (i.e. movement) of the object or structure. The object or structure may be attached to the attachment component 14 with an appropriate fixing, such as a bolt. The object or structure may be an actuating arm 18. The actuating arm 18 may connect the EMA 1 with a movable element of the aircraft, such as a flight control surface 8, such that actuation of the EMA 1 results in movement of the movable element.

The EMA 1, further comprises an actuation element 19. The actuation element 19 may connect the stationary body portion 11 and the movable body portion 13. The actuation element 19 may be configured to actuate the movable body portion 13 relative to the stationary body portion 11. For example, the actuation element 19 may comprise a motor configured to rotate the movable body portion 13. In other examples, the actuation element 19 may comprise a motor and a gear box assembly configured to actuate the movable body portion 13.

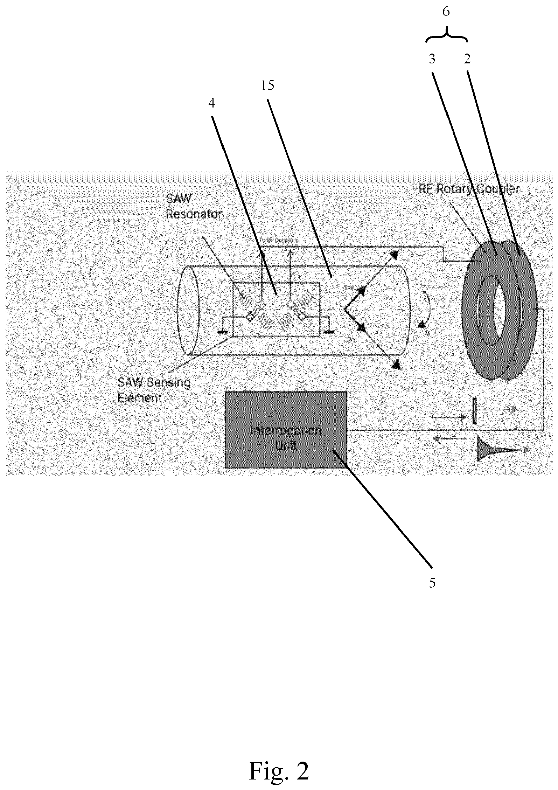

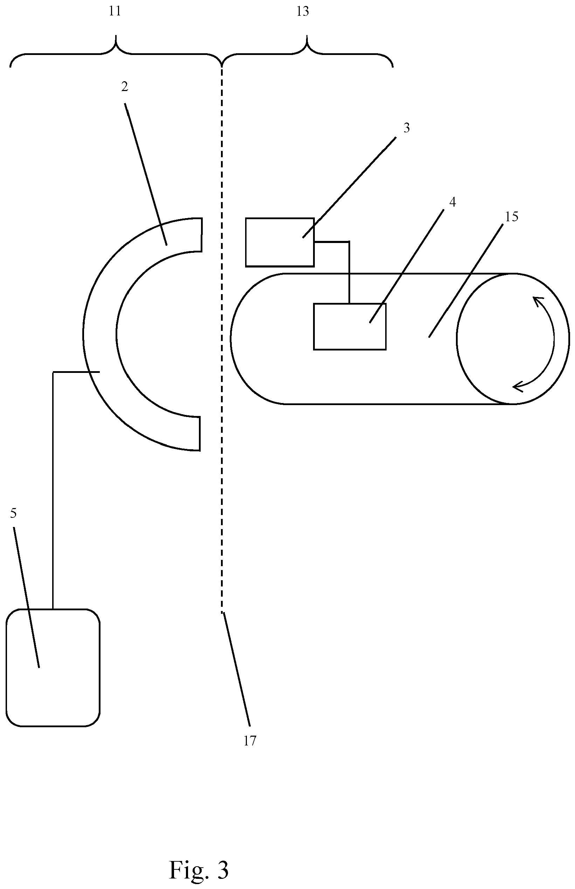

The actuation element 19 may comprise an output shaft (e.g. which may be the rotatable shaft 15 of Figure 2 or Figure 3), with the output shaft being connected to a gear box such as a planetary gear box, or a compound gear box.

Referring now to Figures 2 and 3, the EMA 1 further comprises a surface acoustic wave, SAW, sensor 4, for the purpose of monitoring various properties of the EMA 1. SAW sensors are used for measuring various parameters of rotating shafts, such as torque applied to the shafts - as described in US8015886.

Figure 2 shows a schematic diagram of a SAW sensor 4, as well as the associated components of the SAW sensor 4.

The SAW sensor 4 is attached to a rotatable shaft 15 of the EMA 1, but it may equally be attached to any other component of the EMA 1, such as any component of a gearbox assembly, or any component of a motor or any other driving mechanism.

The SAW sensor 4 works by producing surface acoustic waves on the surface of a substrate when stimulated by an input signal. A surface acoustic wave (SAW) is an acoustic wave traveling along the surface of a material exhibiting elasticity, with an amplitude that typically decays exponentially with depth into the material, such that they are confined to a depth of about one wavelength. The resonant frequency of the SAW sensor 4 depends on the substrate used as well as the specific configuration of the SAW sensor 4 (e.g. electrode finger size, spacing etc.). By measuring changes in the resonant frequency(ies) of the SAW sensor 4 it is possible to determine changes in properties of the substrate material, and by extension, properties of the component the sensor is attached to (e.g. the rotatable shaft 15). For example, a torque applied to the rotatable shaft 15 will cause a corresponding strain in the attached substrate of the SAW sensor 4, i.e. it will deform under stress. The deformation of the substrate will cause small changes to the physical dimensions of the SAW sensor 4 which will in turn change the resonant frequency(ies) of the SAW sensor 4. This change in resonant frequency(ies) can be corelated to the state of the rotatable shaft 15 (e.g. the torque applied to the rotatable shaft 15, and/or the temperature of the rotatable shaft 15).

A radio-frequency (RF) rotary coupler 6 is used in order to communicate between the SAW sensor 4, mounted to a rotating component, and an interrogation unit 5, mounted to a stationary component, a radio-frequency (RF) rotary coupler is used.

The interrogation unit 5 may be in electrical connection with the first interface component 2 and thus send signals to the first interface component 2 (e.g. via a wired link).

A signal from the interrogation unit 5 may be transferred from the first interface component 2 to the second interface component 3, which may be in electrical communication with the SAW sensor 4 (e.g. via a wired link). Thus, the signal from the interrogation unit 5 is transmitted to the SAW sensor 4, via the RF rotary coupler, and causes the generation of the surface acoustic waves.

A return signal is transmitted from the SAW sensor 4 back to the second interface component 3, transmitted to the first interface component 2, and then finally transmitted to the interrogation unit 5. The return signal contains information regarding the resonant frequencies of SAW sensor 4, and thus can be used to obtain and/or infer information about properties of the component the SAW sensor 4 is attached to, i.e. the rotatable shaft 15.

The interrogation unit 5 may be configured to process the return signal and derive properties of the component the SAW sensor 4 is attached to, or alternatively, may be configured to transmit the signal to another component for processing the signal and deriving properties.

Figure 3 shows a schematic diagram of the embodiment of Figure 1, illustrating further details of the RF rotary coupler 6.

The RF rotary coupler comprises a first interface component 2 and a second interface component 3. That is, the first interface component 2 and the second interface component 3 are configured to communicate without a conducting link between them (e.g. without a wired link between the first interface component 2 and the second interface component 3). Rather, the RF rotary coupler 6 uses inductive coupling for signal transmission between the first interface component 2 and the second interface component 3.

The first interface component 2 may be rigidly attached to a stationary component of the EMA 1, such as the stationary body portion 11. The second interface component 3 may be rigidly attached to a rotating component of the EMA 1, such as the rotating shaft 15 or the movable body portion 13. This allows the SAW sensor 4 and the interrogation unit 5 to maintain communication with each other despite the rotation and/or relative movement of different components of the EMA 1. In other words, the first interface component 2 and the second interface component 3 acts as two antennas which wirelessly couple the SAW sensor 4 and the interrogation unit 5.

The first interface component 2 and the second interface component 3 may be positioned on either side of a notional interface 17 defined between the stationary body portion 11 and the movable body portion 13. That is, the interface may be a conceptual plane defined perpendicular to the axis of rotation between the stationary body portion 11 and the movable body portion 13 of the EMA 1, and only represents a spatial boundary between the stationary body portion 11 and the movable body portion 13.

This configuration allows the two interface components 2, 3 of the RF rotary coupler 6 to stay in close proximity, thus improving communication of signals between them, while allowing them to be rigidly attached to independently movable portions of the EMA 1. The position of the first interface component 2 and the second interface component 3 on either side of the interface 17 also ensure that the first interface component 2 and the second interface component 3 are proximate to each other without the risk of collision during actuation of the EMA 1.

The first interface component 2 may be larger than the second interface component 3. The first interface component may extend substantially along at least the possible actuation positions of the second interface component 3. In this way, the two interface components 2, 3 remain in communication across the whole range of actuation motion. For example, if the EMA 1 is a rotational EMA which allows actuation across a 360 degree angle of rotation, the first interface component 2 may extend across the whole 360 degree range. If the rotational EMA allows a 120 degree range of rotation, the first interface component may extend substantially along at least the 120 degree range of actuation.

The first interface component 2 and the second interface component 3 of the RF rotary coupler 6 are further configured to define an inductive position sensor of the EMA 1. That is, the first interface component 2 may be configured to produce a signal suitable for determination of the position of the second interface component 3. The first interface component 2 may be configured to emit an inductive field configured to interact with the second interface component 3. The interaction of the signal (and/or the inductive field) may be detected and provide a signal which is suitable to determine the position of the second interface component 3 relative to the first interface component 2.

To achieve this, the second interface component 3 comprises a target part, configured to interact with the inductive field emitted by the first interface component 2. The target part may be a non-uniformity of the second interface component 3, allowing the position of the non-uniformity (i.e. target part) to be detected.

In this embodiment, the first interface component 2 comprises a single component configured to provide both the functionality of signal transmission for the SAW sensor 4 and the functionality of detection of the position of the target part. The first interface component 2 may be a single electronic board (e.g. a single printed circuit board) comprising components for performing these functionalities. The single electronic board may comprise conductive tracks to perform these functionalities.

The first interface component 2 comprises a planar array of conductors configured to transmit and receive signals to and from the second interface component 3, and specifically from the target part of the second interface component 3. The planar array of conductors may allow the first interface component 2 to produce an inductive signal across the whole length of the first interface component 2, thus probing all possible locations of the second interface component 3 and particularly the target part. The planar array of conductors making up the position sensor 6 may be arranged in a manner known in the art.

In use, the first interface component 2 emits the inductive field which interacts with the second interface component 3. The planar array of conductors may comprise a transmission electrical track. The transmission electrical track may be a transmission coil, which may be configured to induce an electromagnetic field in the vicinity of the first interface component 2. The interaction between the emitted/inducted signal and the second interface component 3 (and/or the target part) may result in a change of the signal in a particular position along the first interface component 2. The planar array of conductors may comprise a plurality of sensing electrical tracks along the length of the first interface component 2.

The sensing electrical tracks may be configured to detect the particular position where the emitted signal interacts with the second interface component 3. For example, the planar array of conductors may comprise two or more electrical tracks, which may be arranged in a sinusoidal-type curve. The sinusoidal-type curve may result in detection of a signal which is a function of the position of the second interface component. This may allow the system to determine the position of the second interface component 3 relative to the first interface component 2. This determination may in turn allow the system to determine the position of the EMA 1 within the range of possible movable positions.

The interrogation unit 5 may be configured to send an interrogation signal to the first interface component 2. The interrogation signal may be configured to interrogate one or both of the SAW sensor 4 and the target part. For example, the interrogation signal may comprise a first signal component at a first frequency. The interrogation signal may comprise a second signal component at a second frequency. The use of a single signal (e.g. the interrogation signal) comprising two different signal components, may allow the use of a single electrical signal to probe the SAW sensor 4 and the position sensor 6 at the same time.

The first frequency may be different to the second frequency. This may facilitate the interrogation unit being used for probing two different sensors. The first frequency may be in a first frequency range of between 100-200MHz. The second frequency may be in a second frequency range of between 1-50MHz. The frequency ranges may provide an adequate, or even an optimal, interaction between the sensors. For example, the first frequency may provide adequate probing of the SAW sensor 4, while the second frequency may provide an adequate probing of the position sensor 6.

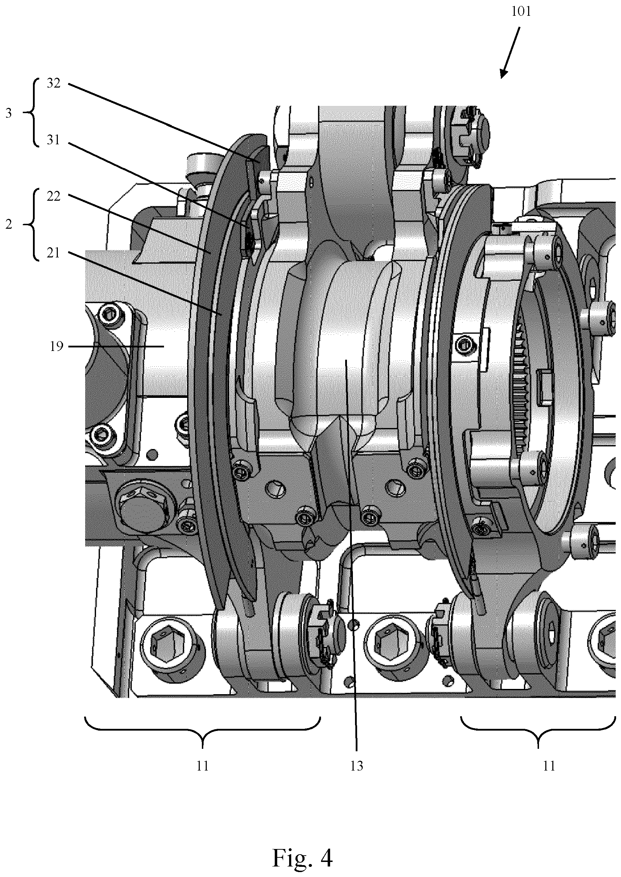

Figure 4 shows a schematic of a second embodiment of an EMA 101 with operational sensors. The EMA 101 operates in substantially the same manner as the EMA 1 described above, and only the differences will be described below.

In this embodiment, the first interface component 2 comprises a stationary body portion SAW antenna 21 and a position detection antenna 22, while the second interface component 3 comprises a movable body portion SAW antenna 31 and a position target 32.

The stationary body portion SAW antenna 21 and the movable body portion SAW antenna 31 provide the contactless communication between the interrogation unit 5 and the SAW sensor 4. The position detection antenna 22 and the position target 32 provide the contactless inductive position sensor 6 functionality. Thus, the two systems (i.e. SAW sensor 4 RF rotary coupler and the inductive position sensor 6) are functionally independent of each other.

The movable body portion SAW antenna 31 is configured to transmit signals between the stationary body portion SAW antenna 21 and the SAW sensor 4, and the position target 32 is configured to interact with the position detection antenna 22 to produce a signal indicative of the position of the position target 32. The position target 32 may be a target part of the movable body portion SAW antenna 31 (e.g. the non-uniformity) described above in relation to the first embodiment.

Alternatively, the position target 32 may be a discrete, passive position target device. The passive position target device may provide a simple means of determining the position of the second interface device 3 relative to the first interface device 2 without the need of internal power source (e.g. battery). The position target 32 may be manufactured from a piece of printed circuit board. The printed circuit board may comprise electrical tracts configured to interact with an emitted signal in the vicinity of the printed circuit board.

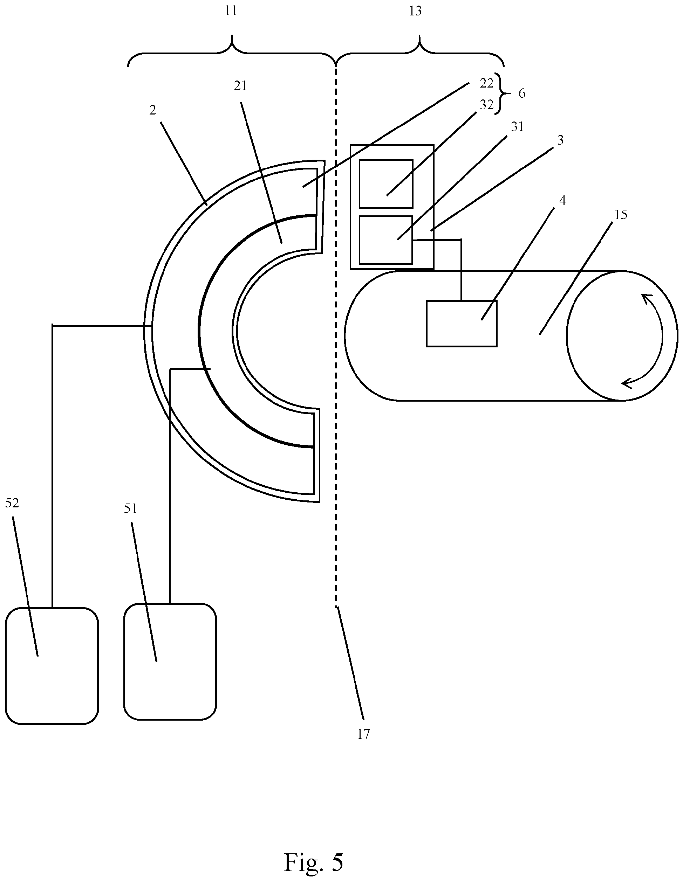

Figure 5 shows a schematic diagram of the embodiment of Figure 4, where the stationary body portion SAW antenna 21 and the position detection antenna 22 are disposed adjacent to each other. This may result in a smaller total size of the first interface component 2, which provides the functionality of the SAW antenna and the position sensor antenna. The stationary body portion SAW antenna 21 and the position detection antenna 22 may be disposed on the same surface, and may be distinct electrical components provided on a single circuit board. This may allow the two components of the first interface device 2 to be manufactured at the same time.

Alternatively, stationary body portion SAW antenna 21 and the position detection antenna 22 may be two distinct electrical devices arranged together by conventional means (e.g. by permanent attachment or detachable attachment) to each other, or to a single component (e.g. a single backing component configured to hold each of stationary body portion SAW antenna 21 and the position detection antenna 22 in position).

The position detection antenna 22 may be radially outwards of the stationary body portion SAW antenna 21. This positioning may allow a longer swept distance of the position detection antenna 22 to be provided, which may result in a more precise position detection of the position detector 6.

The embodiment illustrated in Figures 4-5 comprises a SAW interrogation unit 51 and a position interrogation unit 52. The SAW interrogation unit 51 may be configured to send the signal to the stationary body portion SAW antenna 21 in order to probe the SAW sensor 4 and the position interrogation unit 52 may be configured to send a signal to the position detection antenna 22 in order to probe the position target 32. Of course, it is possible for a single interrogation unit (e.g. the interrogation unit 5 of Figs. 2-3) to provide the functionality of the SAW interrogation unit 51 and the position interrogation unit 52.

In the embodiment illustrated in Figures 4-5, the SAW interrogation unit 51 may be configured to send a SAW interrogation signal comprising the first frequency, and the position interrogation unit 52 may be configured to send a position integration signal comprising the second frequency. This way, the system may probe the two sensors independently.

The interrogation unit 5 (or SAW interrogation unit 51 and position interrogation unit 52), may be configured to probe the sensors periodically and/or may be configured to probe the sensors in response to a request. The request may be transmitted to the interrogation unit 5 by another system (e.g. an aircraft control system, if the EMA 1 is integrated in an aircraft). The request may be sent to the interrogation unit 5 as an analog signal or a digital signal. The request may comprise a request to probe the SAW sensor 4 or the position sensor 6 or to probe both the SAW sensor 4 and the position sensor 6.

By integrating position sensing with a SAW sensor into a single pair of interface components, as described in respect of both embodiments above, it is possible to reduce the total envelope of the system, and thereby reduce the weight of an EMA 1, 101. Conventionally, an output position sensor would be attached to an output ring on an actuator, which results in a larger overall size of the actuator and therefore necessitates a larger casing to contain the actuator with the output position sensor. The larger casing increases cost and weight of the actuator, which is not ideal. By integrating position sensing into SAW sensor interface components, it is possible to provide an EMA 1, 101 with a position sensor, without increasing the size of the actuator substantially or even at all. This does not increase the cost and weight associated with a larger actuator casing substantially. Thus, compared to a conventional actuator with position sensing, the present invention provides a system with a reduced weight and/or cost.

The EMAs 1, 101 described above may be used to actuate flight control surfaces of an aeroplane. The flight control surfaces may be positioned on either or both wings of the aeroplane, may be positioned on the horizontal stabilizer(s), on the vertical stabiliser, or on any other part of the aeroplane where flight control surfaces may be positioned. The flight control surfaces may be any one of: flaps, aileron, spoiler, elevator, rudder and the like. The EMA 1, 101 may be arranged inside the aeroplane and configured to actuate any one or more of the flight control surfaces. The EMA 1, 101 may be configured to respond to a signal initiated by an aeroplane pilot to actuate and move the one or more flight control surfaces to allow the pilot to control the aeroplane.

Although described as part of aeroplane, it is contemplated that the EMA 1, 101 can be used in any other vehicle where actuation is required, and where operation of an EMA 1, 101 can be applied. This includes civilian aircraft, as well as military aircraft. This also includes helicopters and the like, as well as unmanned aerial vehicles, where actuation of flight control surfaces is required or desirable.

Thus, an aerial vehicle may comprise at least one flight control surface and at least one EMA 1, 101 configured to actuate the at least one flight control surface, wherein the EMA comprises a SAW sensor and a position sensor as described above.

## Claims

1. An electromechanical actuator, EMA, (1) comprising:
a stationary body portion (11);
a movable body portion (13) configured to move relative to the stationary body portion (11);
an actuation element (19) connecting the stationary body portion (11) and the movable body portion (13) and configured to actuate the movable body portion (13) relative to the stationary body portion (11);
a surface acoustic wave, SAW, sensor (4) disposed on the actuation element (19);
a first interface component (2) disposed on the stationary body portion (11) at an interface (17) between the stationary body portion (11) and the movable body portion (13); and
a second interface component (3) disposed on the movable body portion (13) at the interface (17) between the stationary body portion (11) and the movable body portion (13);
wherein the second interface component (3) is configured to transmit signals between the SAW sensor (4) and the first interface component (2); and
wherein the first interface component (2) and the second interface component (3) define an inductive position sensor (6), such that the first interface component (2) produces a signal suitable for determination of the position of the second interface component (3).

2. The EMA (1) of claim 1, wherein:
the first interface component (2) comprises a stationary body portion SAW antenna (21) and the second interface component (3) comprises a movable body portion SAW antenna (31) configured to transmit signals between the stationary body portion SAW antenna (21) and the SAW sensor (4); and/or
the first interface component (2) comprises a position detection antenna (22) and the second interface component (3) comprises a position target (32) configured to interact with the position detection antenna (22) to produce a signal indicative of the position of the position target (32).

3. The EMA (1) of any of claim 2, wherein the position target (32) is a passive position target device.

4. The EMA (1) of any of claims 2 or 3, wherein the first interface component (2) comprises a planar array of conductors configured to transmit and receive signals to and from the position target (32), optionally, wherein the position detection antenna (22) comprises the planar array of conductors configured to transmit and receive signals to and from the position target (32).

5. The EMA (1) of any preceding claim, wherein the actuation element (19) comprises a motor and a gearbox, and wherein the SAW sensor (4) is disposed on a rotating shaft (15) of the motor or on a component of the gearbox.

6. The EMA (1) of any preceding claim, wherein the SAW sensor (4) is configured to measure a property of the actuation element (19), wherein the property comprises at least one of: a torque, a temperature, a rotation speed and a strain.

7. The EMA (1) of any of claims 2 to 6, wherein the stationary body portion SAW antenna (21) and the position detection antenna (22) are disposed adjacent each other, optionally,
wherein the stationary body portion SAW antenna (21) is radially inwards of the position detection antenna (22).

8. The EMA (1) of any preceding claims, further comprising:
an interrogation unit (5) configured to send an interrogation signal to the first interface component (2), wherein the interrogation signal comprises a first signal component at a first frequency and a second signal component at a second, different frequency.

9. The EMA (1) of claim 8, wherein the first interface component (2) is configured to transmit the first signal component to the second interface component (3).

10. The EMA (1) of claim 8 or 9, wherein the interrogation unit (5) comprises a SAW interrogation unit (51) and/or a position interrogation unit (52), and/or
wherein the first frequency is in a first frequency range of between 100-200MHz and the second frequency is in a second frequency range of between 1-50MHz.

11. The EMA (1) of any preceding claims, wherein the EMA (1) is a rotary actuator configured to provide rotary actuation of the movable body portion (13) relative to the stationary body portion (11).

12. A method of using an electromechanical actuator, EMA, (1) comprising a stationary body portion (11), a movable body portion (13), an actuation element (19), a surface acoustic wave, SAW, sensor (4) disposed on the actuation element (19), a first interface component (2) and a second interface component (3), both the first and second interface component (2, 3) being disposed at an interface between the stationary body portion (11) and the movable body portion (13), the method comprising the steps of:
sending a first signal component at a first frequency to the first interface component (2);
transmitting the first signal component from the first interface component (2) to the SAW sensor (4) through a second interface component (3), so as to cause the SAW sensor (4) to produce surface acoustic waves and return a signal indicative of a property of the actuation element (19) to the first interface component (2);
sending a second signal component at a second frequency to the first interface component (2), so as to determine the position of the second interface component (3) relative to the first interface component (2) based on the inductive interaction between the first interface component (2) and the second interface component (3).

13. The method of claim 12, wherein transmitting the first signal component comprises transmitting the first signal component from a stationary body portion SAW antenna (21) of the first interface component (2) to a movable body portion SAW antenna (31) of the second interface component (3).

14. The method of claim 12 or 13, wherein sending the second signal component comprises sending the second signal component to a position detection antenna (22) of the first interface component (2), and/or
wherein an interrogation unit (5) sends the first signal component and the second signal component to the first interface component (2).

15. An aerial vehicle (7), comprising:
a flight control surface (8); and
an electromechanical actuator, EMA, according to any of claim 1 to 11, wherein the EMA is configured to control the flight control surface (8).
